# EUROPEAN PATENT APPLICATION

(11) **EP 4 801 123 A1**
(43) Date of publication of application: **02.09.2026**
(21) Application number: 26160354.2
(22) Date of filing: 24.02.2026
(51) Int. Cl.: H04W 52/02, H04W 84/12

(54) **LINK-INDEPENDENT SECURED POWER MANAGEMENT IN A NETWORK**

(30) Priority: 27.02.2025 US 202519066089
(71) Applicant: Avago Technologies International Sales Pte. Limited, Singapore 768923 (SG)
(72) Inventor: Shekhar Bhat, Ashwini, 560100 Bangalore, Karnataka (IN); Buhari, Nizamudeen Mohamed, 560100 Bangalore, Karnataka (IN); Krishnapandi, Pandiyaraja, 560100 Bangalore, Karnataka (IN); Daddimane, Renuka, 560100 Bangalore, Karnataka (IN)
(74) Representative: Dilg, Haeusler, Schindelmann Patentanwaltsgesellschaft mbH

(57) **Abstract**

A station (STA) may connect to an access point (AP) via a plurality of wireless links. The STA may determine to transition a power management state of at least a first wireless link, of the plurality of wireless links, to a transitioned state. The STA may transmit, to the AP and over an available wireless link of the plurality of wireless links, a frame including protected data indicating the transitioned state of the first wireless link. The AP may transition the first wireless link to the transitioned state.

## Description

### BACKGROUND

Power management in a network, such as a wireless network, enables a device (e.g., a station) to adjust activity levels of the device. For example, the device may transition into a power-save state during periods of inactivity to conserve energy while maintaining connectivity and functionality with the network.

### SUMMARY

Some implementations described herein provide a station, comprising: circuitry configured to: connect to an access point via a plurality of wireless links; determine to transition a power management state of at least a first wireless link, of the plurality of wireless links, to a transitioned state; and transmit, to the access point and over an available wireless link of the plurality of wireless links, a frame including protected data indicating the transitioned state of the first wireless link.

Some implementations described herein provide an access point, comprising: circuitry configured to: connect to a station via a plurality of wireless links; receive, from the station and over an available wireless link of the plurality of wireless links, a frame including protected data indicating a transition of a power management state of at least a first wireless link, of the plurality of wireless links, to a transitioned state; and transition the first wireless link to the transitioned state.

Some implementations described herein provide a method for secure power management notifications in a wireless local area network (WLAN), the method comprising: generating, by a device, a frame including protected data indicating a change in a power management state of at least a first wireless link, of a plurality of wireless links, to which a station in the WLAN is connected to an access point in the WLAN; and transmitting, by the device and to the access point, the frame.

### BRIEF DESCRIPTION OF THE DRAWINGS

Fig. 1A is a diagram of an example network environment.
Figs. 1B-1C are diagrams of example components of a computing device associated with link-independent secured power management in a network.
Figs. 2A-2F are diagrams of an example associated with link-independent secured power management in a network.
Fig. 3 is a flowchart of an example process associated with link-independent secured power management in a network.
Fig. 4 is a flowchart of an example process associated with link-independent secured power management in a network.

### DETAILED DESCRIPTION

The following detailed description of example implementations refers to the accompanying drawings. The same reference numbers in different drawings may identify the same or similar elements. The following standards, including any draft versions of such standards, are hereby incorporated by reference in their entirety and are made a part of the present disclosure for all purposes: Wireless Fidelity (Wi-Fi^{®}) Alliance^{®} standards and Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, and 802.11j^{™}. Although the present disclosure may reference aspects of these standard(s), this disclosure is in no way limited by these standard(s).

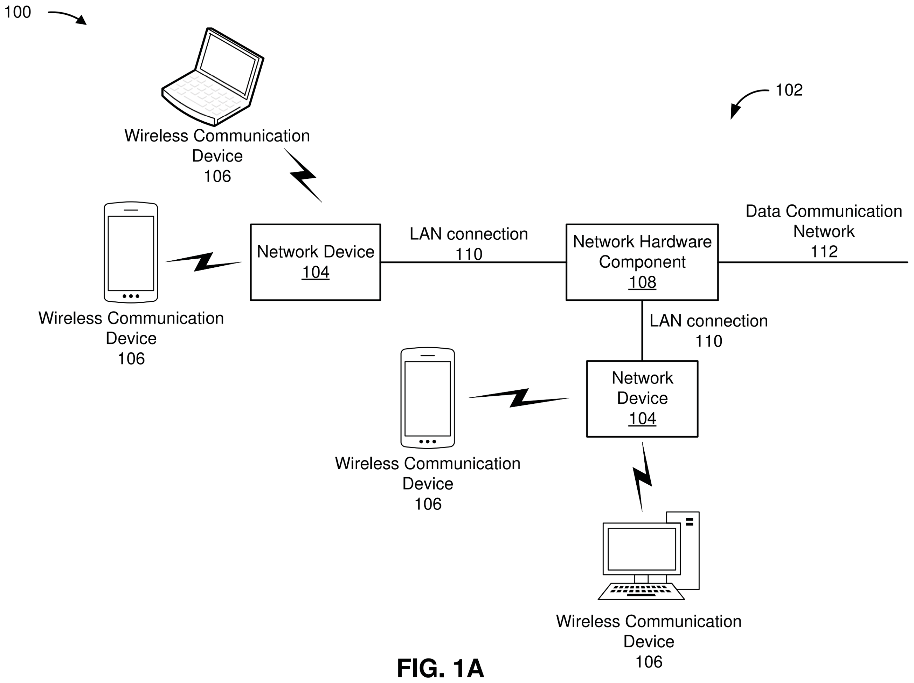

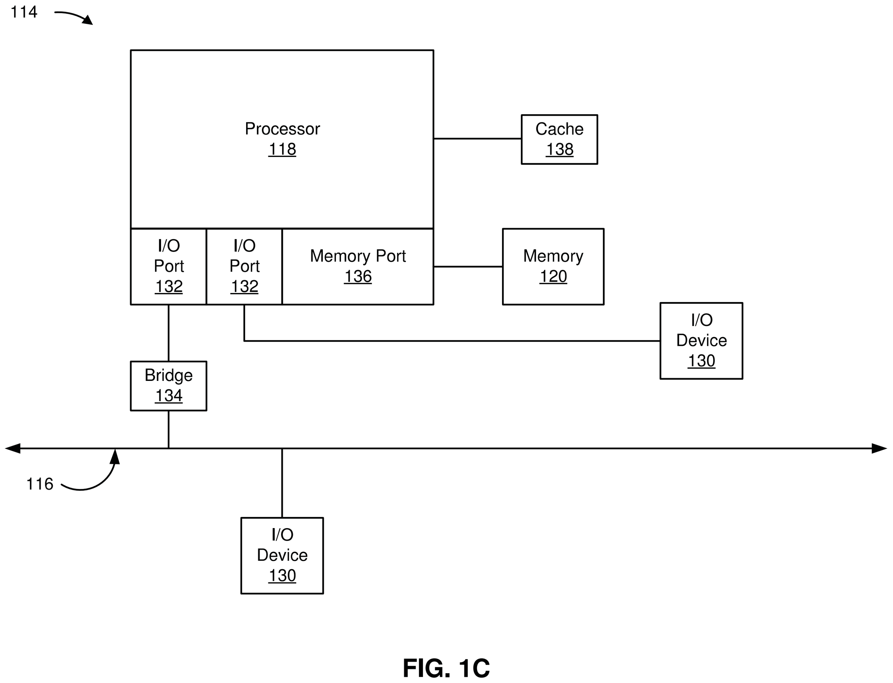

Fig. 1A is a diagram of an example environment (e.g., an example network environment 100) in which systems and/or methods described herein may be implemented. As shown in Fig. 1A, the network environment 100 includes a wireless communication system 102. In some implementations, the wireless communication system 102 may include devices and/or components that facilitate data transmission and/or connectivity via a network (e.g., a wired and/or a wireless network). For example, the wireless communication system 102 may include a network device, which may also be referred to herein as an access point (AP) or a wireless AP, a wireless communication device, which may also be referred to herein as a station (STA), and a network hardware component, which may also be referred to herein as a node.

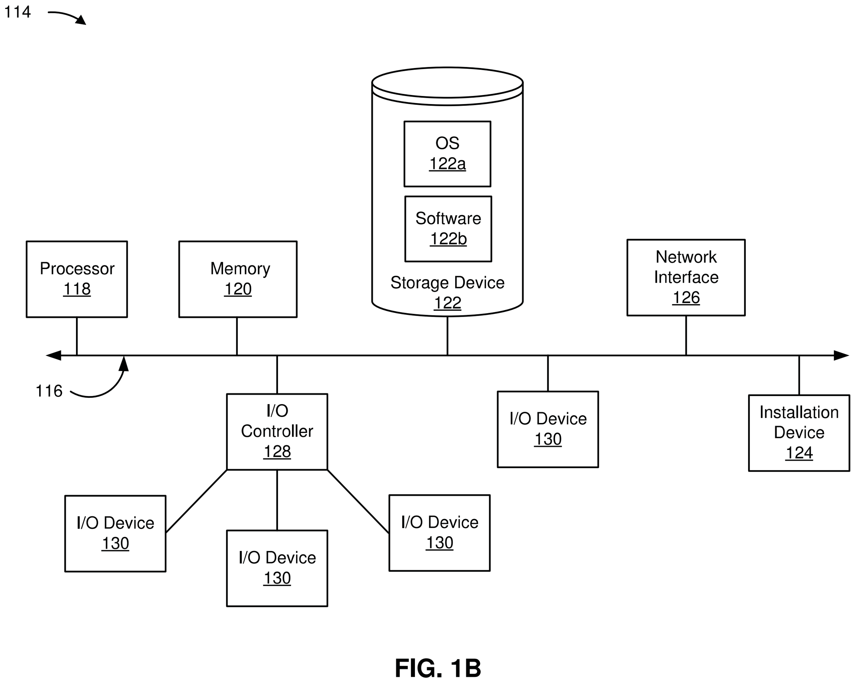

Communication among the network device, the wireless communication device, and/or the network hardware component may be enabled via a network (e.g., a wired and/or a wireless network connection). The network device, the wireless communication device, and the network hardware component are depicted and described in more detail in connection with Figs. 1B-1C and/or as described in more detail elsewhere herein.

In some implementations, the network may include any type and/or form of network. As an example, the network may include a point-to-point network, a broadcast network, a telecommunications network, a data communication network, and/or a computer network, among other examples. The network may include any suitable network topology, such as a bus, a star, and/or a ring network topology, among other examples. Accordingly, for example, the network may be any suitable network topology capable of supporting the systems and methods described herein.

In some implementations, the network may include a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a near-field communication network, a Zigbee^{®} network, a long range wide area network (LoRaWAN^{®}), an ultra-wideband (UWB) network, a worldwide interoperability for microwave access (WiMAX^{®}) network, a satellite network, a telephone network, a private network, the Internet, or a combination of these and other network types. Additionally, in some implementations, different types of data may be transmitted using different protocols, and the same type of data may also be transmitted using multiple protocols.

The network device may include an antenna, or antenna array, to communicate with the wireless communication device (e.g., within a coverage area of the network device). In some implementations, the network device may include one or more devices, such as Wi-Fi^{®} APs that facilitate WLANs and/or cellular base stations (e.g., fifth generation (5G) base stations) that provide network connectivity for cellular communication systems. The network device may enable wireless connectivity for the wireless communication device by managing data transmission and ensuring proper communication within a respective network environment.

In some implementations, the network device may enable the wireless communication device to connect to a wired network using standards, such as Wi-Fi^{®} standards and/or 802.11 standards. The network device may be implemented (e.g., configured, designed and/or built) for operating in a WLAN.

In some implementations, the network device may connect to a router (e.g., via a wired network) as a standalone device. In some implementations, the network device may be a component of a router. The network device may provide multiple devices (e.g., multiple wireless communication devices) access to a network. The network device may connect to a wired ethernet connection and provide wireless connections using radio frequency (RF) links for other devices (e.g., other wireless communication devices) to utilize that wired connection. The network device may be implemented to support a standard (e.g., a standard defined by the IEEE). The network device may be configured and/or used to support public Internet hotspots, and/or on a network to extend a Wi-Fi^{®} signal range of the network.

In some implementations, the network device may be used for wireless networks in various environments (e.g., in-home, in-vehicle, and/or in-building environments) utilizing protocols, such as IEEE 802.11, Bluetooth, ZigBee, and/or any other RF-based protocol, including variations thereof. The wireless communication device may include a radio (e.g., a built-in radio) and/or may be operably coupled to an external radio. The network device and the wireless communication device may operate in accordance with various aspects of the disclosure as described herein, which may enhance performance, reduce costs and/or size, and/or improve broadband applications, among other examples. Each wireless communication device may function as a client node seeking access to resources (e.g., data and connections to networked nodes, such as servers) via one or more network devices.

The wireless communication device may include one or more devices, such as smartphones, laptops, tablets, internet-of-things (IoT) devices, and/or other mobile devices, that connect to network devices (e.g., APs or base stations) to access network services. These wireless communication devices may manage data reception and transmission through established wireless connections and interact with the network environment to facilitate communication.

The network hardware component may include one or more devices, such as routers, gateways, switches, and/or other networking components, that provide wired or wireless connectivity and enable communication within an LAN connection and/or between devices (e.g., network devices and/or wireless communication devices) in a network environment. The network hardware components may route data, manage network traffic, and/or ensure communication integrity between devices (e.g., network devices and/or wireless communication device) within a wireless network system.

In some implementations, the wireless communication device may register with a network device to receive services from the wireless communication system 102 (e.g., via a single-user multiple-input multiple-output (SU-MIMO) configuration or a multi-user multiple-input multiple-output (MU-MIMO) configuration, among other examples). For direct connections (e.g., point-to-point communications), wireless communication devices may communicate directly via an allocated channel and communications protocol. Additionally, in some implementations, the wireless communication devices may be mobile and/or static (e.g., relatively static) with respect to the network device.

The network devices and/or the wireless communication devices may be deployed as, and/or executed on, any type and/or form of computing device, such as a computer, a network device, and/or an appliance capable of communicating on any type and/or form of network and performing the operations described herein.

As further shown in Fig. 1A, the network environment 100 includes network devices 104 (e.g., APs), wireless communication devices 106 (e.g., STAs), and a network hardware component 108 (e.g., a node). The network hardware component 108 may provide network connections (e.g., shown as LAN connections 110 and a data communication network 112 in Fig. 1A) for the wireless communication system 102. The network devices 104 may be operably coupled to the network hardware component 108 via the LAN connections 110. Although the network hardware component 108 is shown and described in connection with Fig. 1A as providing the LAN connections 110 and the data communication network 112, the network hardware component 108 may provide any suitable network connections.

The number and arrangement of devices and networks shown in Fig. 1A are provided as an example. In practice, there may be additional devices and/or networks, fewer devices and/or networks, different devices and/or networks, or differently arranged devices and/or networks than those shown in Fig. 1A. Furthermore, two or more devices shown in Fig. 1A may be implemented within a single device, or a single device shown in Fig. 1A may be implemented as multiple, distributed devices. Additionally, or alternatively, a set of devices (e.g., one or more devices) of the network environment 100 may perform one or more functions described as being performed by another set of devices of the network environment 100.

Figs. 1B-1C are diagrams of an example computing device 114, as described herein. The computing device 114 may correspond to a network device (e.g., the network devices 104), a wireless communication device (e.g., the wireless communication devices 106), and/or a network hardware component (e.g., the network hardware component 108). In some implementations, a network device (e.g., the network devices 104), a wireless communication device (e.g., the wireless communication devices 106), and/or a network hardware component (e.g., the network hardware component 108) may include the computing device 114.

As shown in Figs. 1B-1C, the computing device 114 includes a bus 116 (e.g., a system bus), a processor 118 (e.g., a CPU), a memory 120 (e.g., a main memory), a storage device 122, an installation device 124, a network interface 126, an input/output (I/O) controller 128, I/O devices 130, an I/O port (e.g., shown as I/O ports 132), a bridge 134, a memory port 136, and a cache 138.

The bus 116 may include one or more components that enable wired and/or wireless communication among the components of the computing device 114. The bus 116 may couple together two or more components of Figs. 1B-1C, such as via operative coupling, communicative coupling, electronic coupling, and/or electric coupling. For example, the bus 116 may include an electrical connection (e.g., a wire, a trace, and/or a lead, among other examples) and/or a wireless bus. Furthermore, when an element is referred to herein as being "connected" or "coupled" to another element, it should be understood that the elements may be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

The processor 118 may include a central processing unit (CPU), a graphics processing unit (GPU), a microprocessor, a controller, a microcontroller, a digital signal processor, a field-programmable gate array (FPGA), an application-specific integrated circuit (ASIC), and/or another type of processing component and/or circuitry. The processor 118 may be implemented in hardware, software, and/or a combination of hardware and software. In some implementations, the processor 118 may include one or more processors capable of being programmed to perform one or more operations or processes as described herein.

The memory 120 may include volatile and/or nonvolatile memory. For example, the memory 120 may include random access memory (RAM), read-only memory (ROM), a hard disk drive, and/or another type of memory (e.g., a flash memory, a magnetic memory, and/or an optical memory). The memory 120 may include internal memory (e.g., RAM, ROM, or a hard disk drive) and/or removable memory (e.g., removable via a universal serial bus (USB) connection). The memory 120 may be a non-transitory computer-readable medium. The memory 120 may store information, one or more instructions, and/or software (e.g., one or more software applications) related to the operation of the computing device 114. In some implementations, the memory 120 may include one or more memories that are coupled (e.g., communicatively coupled) to one or more processors (e.g., the processor 118), such as via a bus (e.g., the bus 116). Communicative coupling between the processor 118 and the memory 120 may enable the processor 118 to read and/or process information stored in the memory 120 and/or to store information in the memory 120.

In some implementations, the memory 120 may include one or more memory chips capable of storing data and/or allowing a storage location to be accessed (e.g., directly accessed) by the processor 118, such as any type or variant of static random-access memory (SRAM), dynamic random-access memory (DRAM), ferroelectric RAM (FRAM), not-and (NAND) flash memory, not-or (NOR) flash memory, and/or solid state drives (SSDs). The memory 120 may be based on any suitable memory chips capable of operating as described herein. As shown in Fig. 1B, the processor 118 may communicate with the memory 120 via the bus 116, as described in more detail elsewhere herein. As further shown in Fig. 1B, the storage device 122 may include an operating system (OS) 122a and software 122b.

In some implementations, the processor 118 may communicate directly with the cache 138 (e.g., via a secondary bus, which is sometimes referred to as a backside bus). In some implementations, the processor 118 may communicate with the cache 138 using the bus 116. In some implementations, the cache 138 may be provided by SRAM, block static random-access memory (BSRAM,) and/or embedded dynamic random-access memory (EDRAM). In some implementations, the processor 118 may communicate with the I/O devices 130 via the bus 116. Various buses may be used to connect the processor 118 to any of the I/O devices 130, such as a video electronics standards association (VESA) local bus (VESA VL), an industry standard architecture (ISA) bus, an extended industry standard architecture (EISA) bus, a microchannel architecture (MCA) bus, a peripheral component interconnect extended (PCI) bus, a peripheral component interconnect extended (PCI-X) bus, a PCI-Express (PCle) bus, and/or a NuBus.

In some implementations, the I/O devices 130 may include a display device such as a video display, and the processor 118 may use an advanced graphics port (AGP) to communicate with the video display. In some implementations, the processor 118 may communicate directly with the I/O devices 130 (e.g., via HYPERTRANSPORT, RAPIDIO, or INFINIBAND communications technology). In some implementations, local buses and/or direct communication may be utilized (e.g., the processor 118 may communicate with the I/O devices 130 using a local interconnect bus and/or directly).

The I/O devices 130 may include one or more input devices that enable the computing device 114 to receive input, such as user input and/or sensed input. For example, the input devices may include one or more touch screens, keyboards, keypads, mice, trackpads, trackballs, dials, touch pads, drawing tablets, buttons, microphones, switches, sensors, global positioning system (GPS) sensors, accelerometers, gyroscopes, and/or actuators, among other examples.

The I/O devices 130 may include one or more output devices that enable the computing device 114 to provide output. For example, the I/O devices 130 may include one or more video displays, speakers, inkjet printers, laser printers, projectors, dye-sublimation printers, and/or light-emitting diodes (LEDs), among other examples.

An I/O controller (e.g., the I/O controller 128) may control the I/O devices 130. For example, the I/O controller 128 may control one or more keyboards and/or pointing devices (e.g., mice and/or optical pens), among other examples. Furthermore, an I/O device (e.g., of the I/O devices 130) may provide storage and/or an installation medium for the computing device 114. In some implementations, the computing device 114 may provide universal serial bus (USB) connections to receive handheld USB storage devices.

The installation device 124 may be any suitable installation device, such as a disk drive, a CD-ROM drive, a CD-R/RW drive, a DVD-ROM drive, a flash memory drive, a tape drive (e.g., one or more tape drives of various formats), a USB device, a hard-drive, a network interface, and/or any other device suitable for installing software (e.g., the software 122b) and/or programs. In some implementations, the computing device 114 may include a storage device, such as one or more hard disk drives and/or redundant arrays of independent disks, for storing an operating system (OS) (e.g., the OS 122a) and/or other software, and/or for storing application software programs, such as any program or software for implementing (e.g., configured and/or designed for) the systems and methods described herein. Additionally, or alternatively, the installation device 124 may also be used as the storage device 122. Additionally, or alternatively, the OS 122a and/or the software 122b may be run from any bootable medium.

The network interface 126 may enable the computing device 114 to interface with a network via a connection, such as via telecommunication lines, LANs and/or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, and/or some combination of any or all of the above. In some implementations, connections may be established using one or more communication protocols, such as TCP/IP, IPX, SPX, NetBIOS, Ethernet, ARCNET, SONET, SDH, Fiber Distributed Data Interface (FDDI), RS232, IEEE 802.11 (including versions 802.11a, 802.11b, 802.11g, 802.11n, 802.11ac, and 802.11ad), CDMA, GSM, WiMax, and/or direct asynchronous connections.

In some implementations, the computing device 114 may communicate with other computing devices via any type and/or form of gateway and/or tunneling protocol, such as a secure socket layer (SSL) protocol and/or a transport layer security (TLS) protocol. The network interface 126 may include a network adapter (e.g., a built-in network adapter), a network interface card, a personal computer memory card international association (PCMCIA) network card, a card bus network adapter, a wireless network adapter, a USB network adapter, a modem, and/or or any other device suitable for interfacing the computing device 114 to any type of network capable of communicating and/or performing the operations as described herein.

In some implementations, the computing device 114 may include, or be connected to, one or more display devices (e.g., the I/O devices 130 may include one or more display devices). Accordingly, the I/O devices 130 and/or the I/O controller 128 may include any type and/or form of suitable hardware, software, or combination of hardware and software to support, enable, and/or provide for the connection and use of the one or more display devices by the computing device 114. For example, the computing device 114 may include any type and/or form of video adapter, video card, driver, and/or library to interface, communicate, connect, and/or otherwise use the one or more display devices.

In some implementations, a video adapter may include multiple connectors to interface to the one or more display devices. In some implementations, the computing device 114 may include multiple video adapters, with each video adapter connected to a set of display devices of the one or more display devices. In some implementations, any portion of the OS 122a of the computing device 114 may be configured for using multiple display devices. In some implementations, an I/O device (e.g., of the I/O devices 130) may be a bridge between the bus 116 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an asynchronous transfer mode bus, a FibreChannel bus, a fiber optic bus, a serial attached small computer system interface bus, a USB connection, and/or an HDMI bus.

In some implementations, an OS (e.g., the OS 122a) may control the computing device 114. For example, the OS may control scheduling of tasks and/or access to resources (e.g., system resources). The computing device 114 may run any suitable OS, such as any suitable version of MICROSOFT WINDOWS OSs, Unix OSs, Linux OSs, MAC OSs (e.g., for Macintosh computers), any embedded operating system, any real-time operating system, any open source operating system, any proprietary operating system, any operating systems for mobile computing devices, and/or any other operating system capable of running on the computing device 114 and performing the operations described herein.

In some implementations, the computing device 114 may be any type of computing, telecommunications, and/or media device (e.g., including one or more processors, memories, OSs, and/or I/O devices, among other examples) capable of communication and that has sufficient processor power and memory capacity to perform the operations described herein. For example, the computing device 114 may be a workstation, a telephone, a desktop computer, a laptop, a server, a handheld computer, a mobile phone, a tablet, a personal digital assistant (PDA), a media player, a gaming system, and/or a mobile computing device, among other examples.

In some implementations, the computing device 114 may perform one or more operations or processes described herein. For example, a non-transitory computer-readable medium (e.g., the memory 120) may store a set of instructions (e.g., one or more instructions or code) for execution by the processor 118. The processor 118 may execute the set of instructions to perform one or more operations or processes described herein. In some implementations, execution of the set of instructions, by one or more processors (e.g., the processor 118), causes the one or more of the processors and/or the computing device 114 to perform one or more operations or processes described herein. In some implementations, hardwired circuitry may be used instead of or in combination with the instructions to perform one or more operations or processes described herein. Additionally, or alternatively, the processor 118 may be configured to perform one or more operations or processes described herein. Thus, implementations described herein are not limited to any specific combination of hardware circuitry and software.

The number and arrangement of components shown in Figs 1B-1C. are provided as an example. The computing device 114 may include additional components, fewer components, different components, or differently arranged components than those shown in Figs. 1B-1C. Additionally, or alternatively, a set of components (e.g., one or more components) of the computing device 114 may perform one or more functions described as being performed by another set of components of the computing device 114.

Aspects of the example environment and the example device described above will become apparent in the context of the systems and methods disclosed herein.

An STA in a network, such as a Wi-Fi^{®} network, typically uses a legacy power-save mechanism (LPSM) for power management (PM). The LPSM includes signaling mechanisms that enable the STA to transition between PM states (e.g., active states and power-save (PS) states, among other examples) by setting a PM bit in a frame control field of a medium access control (MAC) header. This PM bit signaling is based on a source address (e.g., indicated in a source address field), which uniquely identifies a link to which the PM bit applies. Accordingly, using the LPSM requires the STA to independently indicate PM transitions for each link associated with the STA.

As a result, the number of PM transition-related frames increases proportionally to the number of links in a multi-link connection. This multiplication of the PM transition-related frames results in additional congestion on a communication medium associated with the network, as multiple PM transition-related frames are transmitted concurrently. The increased number of PM transition-related frames being sent at the same time negatively impacts overall network efficiency. For example, the added signaling overhead consumes more bandwidth, leading to higher power consumption and potential delays in other network operations because of congestion on the communication medium.

Furthermore, if the STA maintains a multi-link connection with the AP and enters an idle state, the STA may receive a traffic indication map (TIM) from the AP, indicating an arrival of a data frame (e.g., a single data frame). To retrieve the data frame, the STA typically sends PM indications with an active state for each available link in the multi-link connection, enabling the AP to deliver the data frame over a link in the multi-link connection with the lowest latency.

After determining that no additional data frames are pending, the STA typically sends PM indications with a PS state (e.g., a sleep state) for each active link. This results in the STA sending multiple frames to retrieve the data frame (e.g., the single data frame), increasing power consumption. For example, if the STA maintains a three-link connection with the AP and all three links are available, the STA typically sends six frames to retrieve the data frame (e.g., three PM indications with an active state for each link and three PM indications with a PS state for each link). This adds significant overhead to the communication process, particularly in multi-link networks.

Additionally, the STA may maintain a multi-link connection where a link becomes inaccessible. For example, the STA may maintain a first link operable on a 2.4 GHz band and a second link operable on a 5 GHz band. If both links are active and the STA moves out of range of the AP on the 5 GHz band, the second link may become inaccessible while the first link remains accessible. In this case, the STA is unable to communicate a PM transition (e.g., a transition from an active state to a PS state) for the second link because the transmission of the PM state for the second link cannot reach the AP (e.g., because the second link is inaccessible). As a result, the AP may incorrectly consider the second link as active, causing inefficiencies and potential data loss.

Furthermore, in some cases, the STA may maintain a two-link connection with an AP where the first link is operable on a 2.4 GHz band and the second link is operable on a 5 GHz band. Under normal conditions, both links may be available (e.g., both links may be in an "on-channel" state). However, concurrent operations, such as scanning or interference mitigation, may cause the second link to become unavailable (e.g., the second link may transition from the on-channel state to an "off-channel" state). In such cases, the STA may continue communication with the AP via the first link but cannot continue communication with the AP via the second link.

This off-channel transition of the second link may occur too quickly for the STA to notify the AP of the change in PM state for the second link, potentially resulting in the AP incorrectly considering the second link as available. Consequently, the AP may continue delivering data frames intended for the second link, even though the second link is unreachable.

Additionally, the AP may fail to buffer the data frames or set a TIM to inform the STA of pending frames, leading to a complete data stall. As a result, the STA may fail to receive the intended data, and the communication flow may be disrupted, causing delays or failures in data transmission. Meanwhile, the first link may continue normal operation, but a lack of synchronization between the first link and the second link may create issues in managing traffic and PM states effectively in the multi-link connection.

Moreover, the LPSM is insecure (e.g., inherently insecure) because the LPSM uses the PM bit within the frame control field of the MAC header to signal the PM states for each link, and this mechanism is not protected by the 802.11 protocol. As a result, malicious entities could potentially manipulate the PM state of a link, leading to denial-of-service (DoS) attacks. Additionally, because the PM bit is exchanged before the STA is fully associated with the AP (e.g., during the exchange of request-to-send/clear-to-send (RTS/CTS) frames), managing the PM state becomes more complex. This complexity increases the likelihood of errors in handling PM states, further complicating PM by the AP and reducing the overall reliability of the connection.

Some implementations described herein enable link-independent secured PM in a network (e.g., a multi-link network). For example, an STA may transmit, and an AP may receive, a frame that indicates, via protected data, a set of PM states of a set of links. In some implementations, protected data may refer to data that has been encrypted or otherwise secured to ensure the confidentiality, integrity, and/or authenticity of the data. For example, the protected data may be encrypted using a protection mechanism, such as a security protocol (e.g., Wi-Fi^{®} Protected Access 2 (WPA2) and/or Wi-Fi^{®} Protected Access 3 (WPA3)), to mitigate a risk of interception, modification, and/or spoofing by unauthorized entities. In some implementations, the protected data may be included in a payload of a protected frame.

In some implementations, a protected frame may refer to a frame having a payload that is encrypted, or otherwise secure, secured via a protection mechanism (e.g., WPA2 or WPA3, among other examples). In this way, the payload of the protected frame may include the protected data indicating the set of PM states of the set of links, as described in more detail elsewhere herein.

In some implementations, each link, included in the set of links, may be identified via a link identifier (link ID), which may be indicated by the protected data. In this way, PM transitions for each link, included in the set of links, may be indicated via a frame (e.g., a single frame) that may be transmitted over any available link included in the set of links. This results in improved bandwidth utilization, increased communication medium availability, reduced power consumption for connected devices (e.g., connected STAs), increased flexibility in communicating PM states of inaccessible links and/or unavailable links (e.g., in a multi-link connection), and enhanced reliability of data transmission (e.g., because the AP is aware of a PM state of the STA for each link with which the STA is associated with) relative to PM transitions indicated via the LPSM.

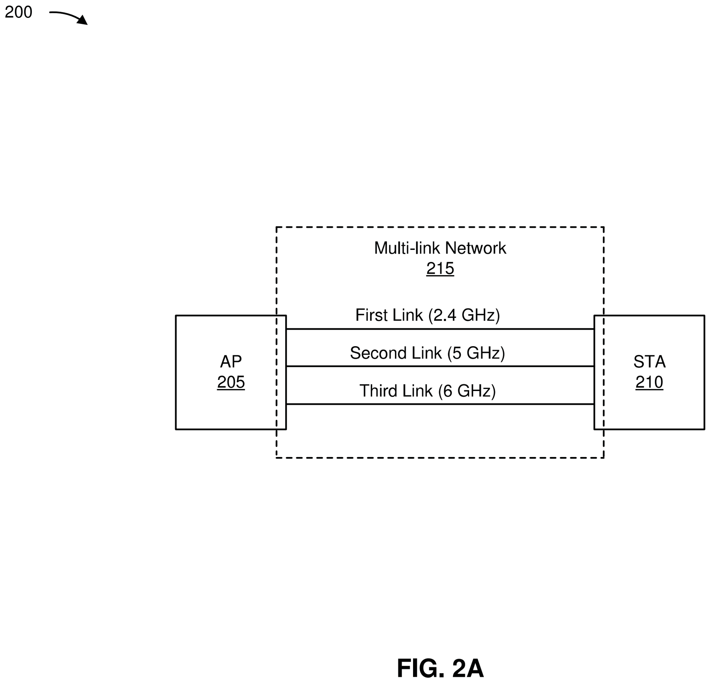

Figs. 2A-2F are diagrams of an example 200 associated with link-independent secured PM in a network (e.g., a wireless multi-link network). As shown in Figs. 2A-2F, the example 200 includes an AP 205 and an STA 210.

In some implementations, the AP 205 and the STA 210 may support Wi-Fi^{®} multi-link operation (MLO). For example, both the AP 205 and the STA 210 may include circuitry configured to manage multiple MAC and physical (PHY) layers associated with different frequency bands and/or channels. As an example, the AP 205 and the STA 210 may each include first circuitry configured to manage the MAC and PHY layers associated with a first link operable in a first band, second circuitry configured to manage the MAC and PHY layers associated with a second link operable in a second band, and third circuitry configured to manage the MAC and PHY layers associated with a third link operable in a third band, as described in more detail elsewhere herein.

As shown in Figure 2A, the AP 205 and the STA 210 may connect within a multi-link network 215. The AP 205 may enable the multi-link network 215 by supporting multiple links (e.g., multiple simultaneous links) over different frequency bands. To establish the multi-link network 215, the AP 205 and the STA 210 may negotiate and configure a set of links for a multi-link connection (e.g., a wireless multi-link connection). In some implementations, the AP 205 may advertise MLO capability and an availability of multiple bands (e.g., the 2.4 GHz band, the 5 GHz band, and/or the 6 GHz band) to the STA 210. In response, the STA 210 may communicate with the AP 205 to join the multi-link network. After the STA joins the multi-link network, the STA 210 may establish an association with the AP 205 for each of the available links.

As further shown in Figure 2A, the STA 210 may associate with the AP 205 across multiple links, including a first link operable on the 2.4 GHz band, a second link operable on the 5 GHz band, and a third link operable on the 6 GHz band. The association process may involve the STA 210 sending association requests and receiving corresponding association responses for each link. Each link, included in the set of links, may be associated with parameters, such as service set identifiers (SSIDs), MAC addresses, and/or communication settings (e.g., channel width and/or modulation rates), among other examples.

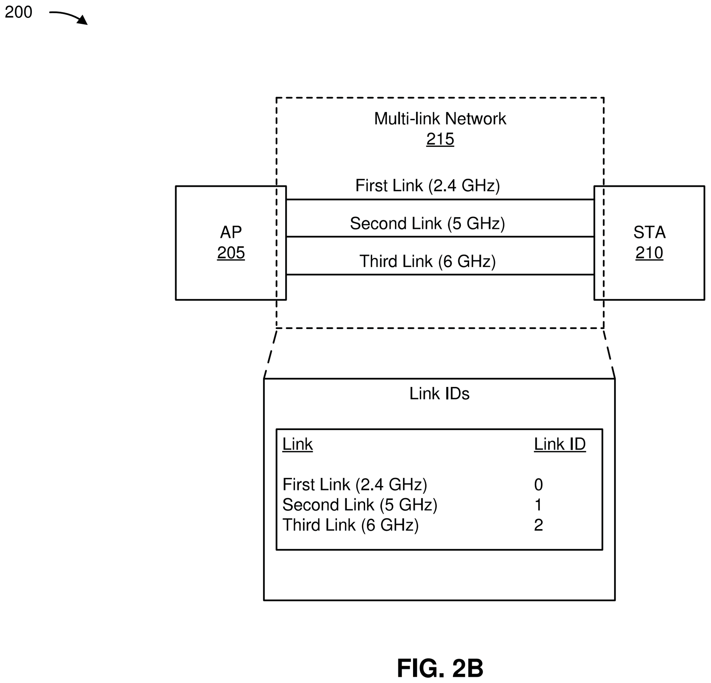

In some implementations, each link, included in the set of links, may be associated with a corresponding link ID (e.g., the AP 205 may associate a set of link IDs with the set of links). For example, the AP 205 may generate (e.g., define) a unique link ID for each link included in the set of links (e.g., as shown in Fig. 2B, the AP 205 may define a link ID of 0 that identifies the first link, a link ID of 1 that identifies the second link, and a link ID of 2 that identifies the third link). In this way, the link IDs may be used to identify individual links, included in the set of links, such as in association with a communication that indicates (e.g., via data included in a secure payload of the communication) a set of PM states of the set of links, as described in more detail elsewhere herein.

In some implementations, the protected data indicating the set of PM states of the set of links may be included in a payload of a protected action frame, such as a new protected extremely high throughput (EHT) action frame. In some implementations, the new protected EHT action frame may be defined (e.g., according to an 802.11 standard, such as the 802.11be^{™} standard), as a multi-link PM (MLPM) notification frame that is used to indicate the set of PM states of the set of links (e.g., in a secure payload of the MLPM notification frame). In some implementations, the set of PM states of the set of links may include one or more operational states of the set of links, such as one or more PS states and/or one or more active states. Accordingly, the set of PM states may correspond to the operational states of the links between the STA and the AP, influencing how data is transmitted and received.

In some implementations, the PS states may include one or more sleep states (e.g., where a link is inactive allowing the STA to conserve energy by preventing data transmission or reception), one or more doze states (e.g., where a link periodically wakes up from the sleep state to check for data and/or frames allowing the STA to conserve power while maintaining minimal connectivity), and/or one or more idle states (e.g., where a link is connected but not actively transmitting or receiving data allowing the STA to conserve power while waiting for incoming data or commands from the AP), among other examples.

In some implementations, the one or more active states may include one or more "radio on" states (e.g., where a link is fully powered on and cable of exchanging communications) and/or one or more keep-alive states (e.g., where a link is fully powered on and capable of exchanging communications), among other examples.

Accordingly, for example, the MLPM notification frame may be used for communicating a PS state and/or an active state (e.g., a radio on state) for each link included in the set of links (e.g., based on the link IDs of the set of links), as described in more detail elsewhere herein. Additionally, or alternatively, the MLPM notification frame may be used to evaluate a reachability of one or more links included in the set of links, as described in more detail elsewhere herein.

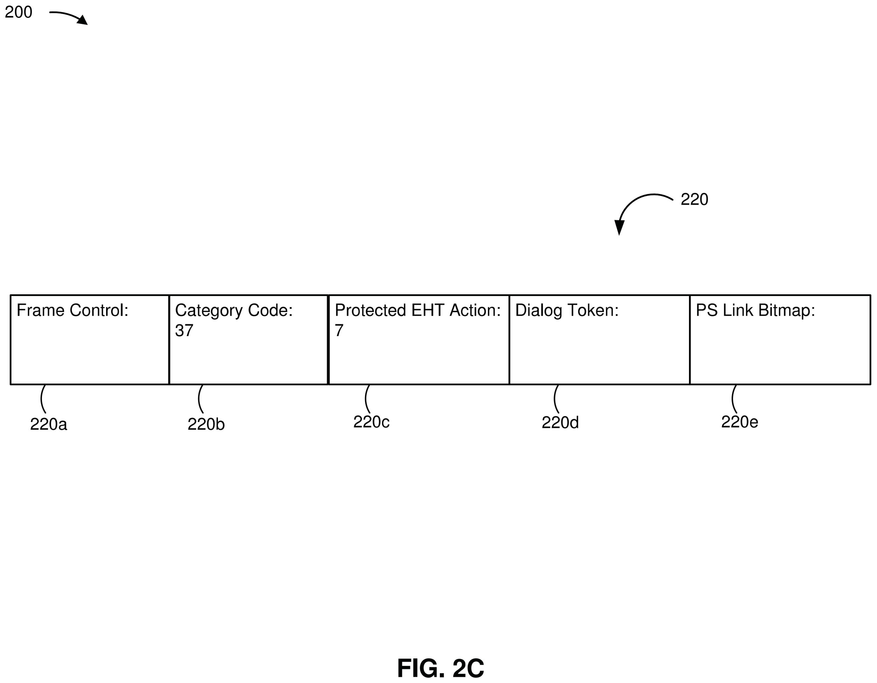

Fig. 2C is an example format 220 of an MLPM notification frame (e.g., the new protected EHT action frame defined according to the 802.11be standard). As shown in Fig. 2C, the format 220 may include a frame control field 220a, a category code field 220b, a protected EHT action field 220c, a dialog token field 220d (e.g., a 1-byte dialog token field, allowing values from 1-255), and a PM link bitmap field 220e (e.g., a 2-byte PM link bitmap field).

The frame control field 220a may include an indication of a PM state associated with the STA 210, such as a PM bit that is set to 1 to indicate that the STA 210 intends to transition to a PS state or a PM bit that is set to 0 to indicate that the STA 210 intends to transition to an active state, among other examples. Although the PM bit may indicate whether the STA 210 intends to transition to a PM state or an active state, the PM states of each link are indicated by the PM link bitmap (e.g., the PM bit does not trigger a PM state transition), as described in more detail elsewhere herein.

The category code field 220b may include an indication of an action frame type, such as a new category code value of 37 (e.g., defined by the 802.11be standard, among other examples) that indicates that the action frame type is a protected EHT action frame. The protected EHT action field 220c may include an indication of an action to perform, such as a new protected EHT action field value of 7 (e.g., defined by the 802.11be standard, among other examples) that indicates that the action to perform is an MLPM notification. The dialog token field 220d may include an identifier that enables proper transaction identification across the set of links. The PM link bitmap field 220e may include an indication of a PM link bitmap that represents the set of PM states of the set of links, as described in more detail elsewhere herein.

In some implementations, each link, included in the set of links, may be associated with a specific bit included in the bitmap (e.g., based on the link ID of each link included in the set of links). For example, bit-0 may correspond to the first link identified by the link ID of 0, bit-1 may correspond to the second link identified by the link ID of 1, and bit-2 may correspond to the third link identified by the link ID of 2.

In some implementations, a set of values of the bits may be used to indicate the set of PM states of the set of links. As an example, setting bit-0 to a value of 1 may indicate that the PM state of the first link is a PS state, setting bit-1 to a value of 1 may indicate that the PM state of the second link is a PS state, and setting bit-2 to a value of 1 may indicate that the third link is in a PS state. As another example, setting bit-0 to a value of 0 (e.g., clearing bit-0) may indicate that the PM state of the first link is an active state, setting bit-1 to a value of 0 (e.g., clearing bit-1) may indicate that the PM state of the second link is an active state, and setting bit-2 to a value of 0 (e.g., clearing bit-2) may indicate that the PM state of the third link is an active state.

Although the format 220 of the MLPM notification frame is shown and described in connection with Fig. 2C as including the frame control field 220a, the category code field 220b, the protected EHT action field 220c, the dialog token field 220d, and the PM link bitmap field 220e, the format 220 of the MLPM notification frame may include any suitable fields. Additionally, although the MLPM notification frame is shown and described in connection with Fig. 2C as being a protected EHT action frame, the MLPM notification frame may be any suitable protected frame having a secure payload.

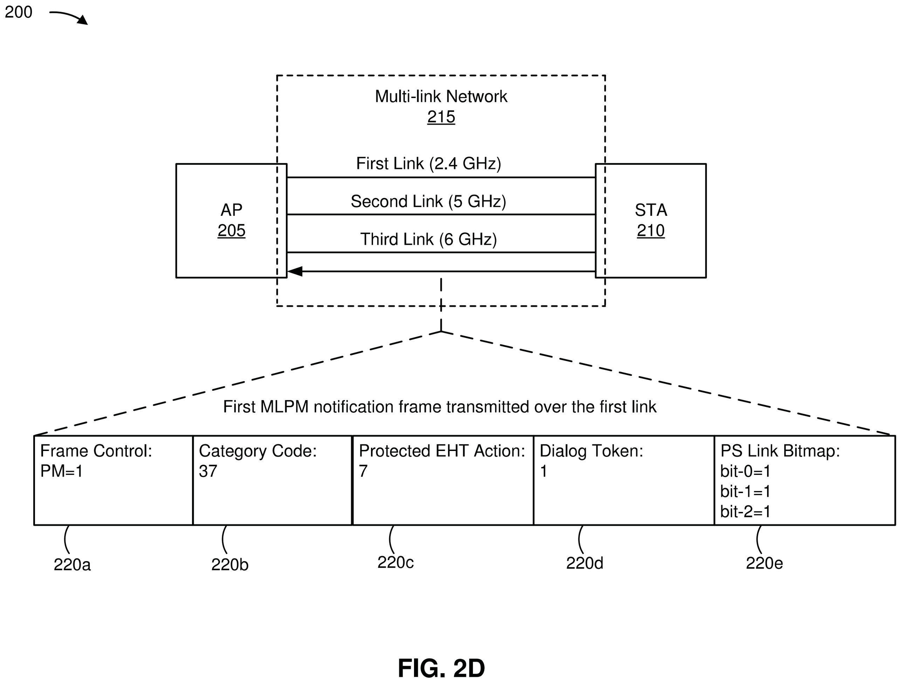

As shown in Fig. 2D, the STA 210 may transmit, and the AP 205 may receive, a first MLPM notification frame transmitted over a link included in the set of links (e.g., the MLPM notification frame is shown as being transmitted over the first link in Fig. 2D). For example, if the STA 210 intends to transition to a PS state, the first MLPM notification frame (e.g., generated by the STA 210) may include a PM bit that is set to 1 (e.g., to indicate that the STA 210 intends to transition to the PS state) and a PM link bitmap that sets bit-0 to a value of 1 (e.g., to indicate that the PM state of the first link is a PS state), that sets bit-1 to a value of 1 (e.g., to indicate that the PM state of the second link is a PS state), and that sets bit-2 to a value of 1 (e.g., to indicate that the third link is in a PS state).

The AP 205 may process the first MLPM notification frame to determine that the PM bit is set to 1 (e.g. indicating that the STA 210 intends to transition to the PS state) and to determine that the first link, the second link, and the third link are in PS states (e.g., based on the indications of the PM states of the first link, the second link, and the third link in the PM link bitmap, which are secured via a secure protocol). Although the first MLPM notification frame is shown and described as being transmitted over the first link, the first MLPM notification frame may be sent over any available link. For example, if the first link, the second link, and the third link are available, the STA 210 may transmit the first MLPM notification frame over the first link, the second link, and/or the third link.

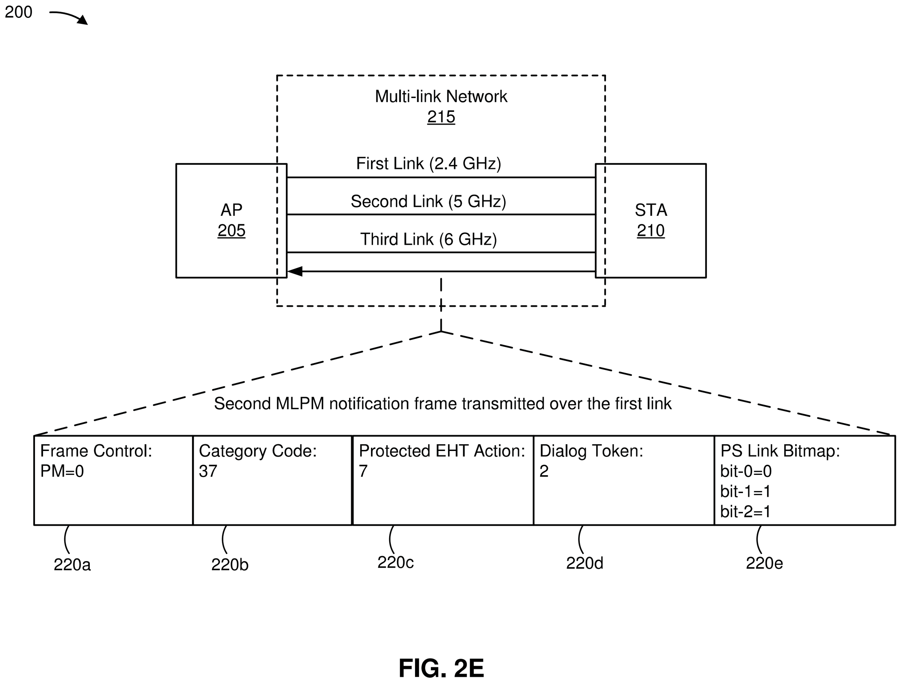

As shown in Fig. 2E, the STA 210 may transmit, and the AP 205 may receive, a second MLPM notification frame transmitted over a link included in the set of links (e.g., the second MLPM notification frame is shown as being transmitted over the first link in Fig. 2E). In some implementations, and if the STA 210 intends to transition to an active state, the STA 210 may determine to transition one or more links, included in the set of links, to an active state. For example, the STA 210 may determine to transition the first link to an active state (e.g., an active state associated with receiving keep-alive traffic) while keeping the second link and the third link in PS states. The second MLPM notification frame (e.g., generated by the STA 210) may include a PM bit that is set to 0 (e.g., to indicate that the STA 210 intends to transition to an active state) and a PM link bitmap that sets bit-0 to a value of 0 (e.g., to indicate that the PM state of the first link is an active state), that sets bit-1 to a value of 1 (e.g., to indicate that the PM state of the second link is a PS state), and that sets bit-2 to a value of 1 (e.g., to indicate that the third link is in a PS state).

The AP 205 may process the second MLPM notification frame to determine that the PM bit is set to 0 (e.g. indicating that the STA 210 intends to transition to the active state), to determine that the first link is in the active state, and to determine that the second link and the third link are in PS states (e.g., based on the indications of the PM states of the first link, the second link, and the third link in the PM link bitmap, which are secured via a secure protocol).

In some implementations, the AP 205 may transmit, and the STA 210 may receive, an acknowledgement frame to acknowledge successful reception of the second MLPM notification frame (e.g., to notify the STA 210 that the second MLPM notification has been received by the AP 205). Although the second MLPM notification frame is shown and described as being transmitted over the first link, the first MLPM notification frame may be sent over any available link. For example, if the first link, the second link, and the third link are available, the STA 210 may transmit the first MLPM notification frame over the first link, the second link, and/or the third link.

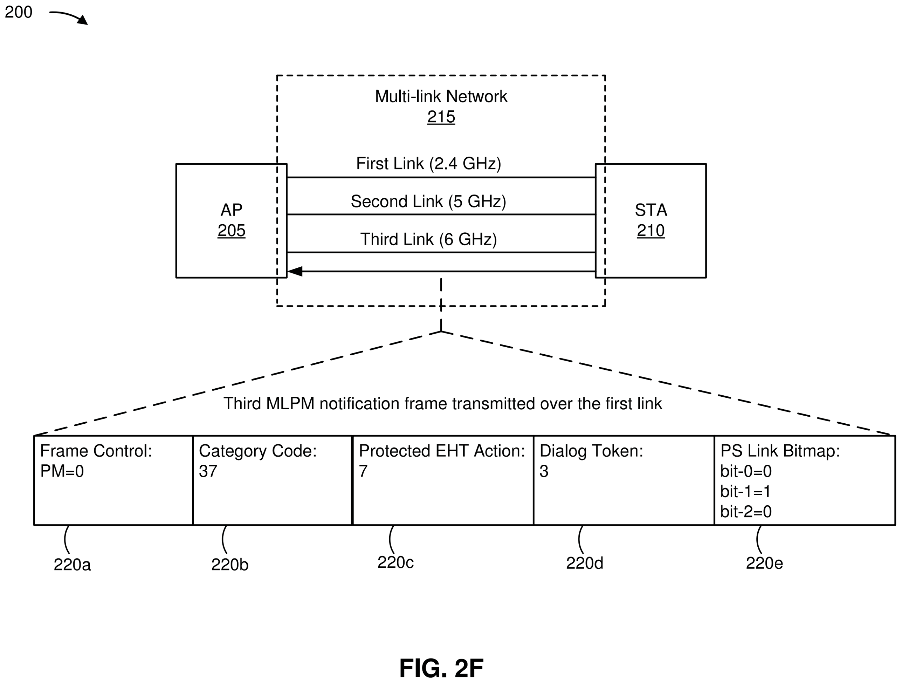

As shown in Fig. 2F, the STA 210 may transmit, and the AP 205 may receive, a third MLPM notification frame transmitted over a link included in the set of links (e.g., the third MLPM notification frame is shown as being transmitted over the first link in Fig. 2F). In some implementations, and if the STA 210 intends to transition to an active state, the STA 210 may determine to transition one or more links, included in the set of links, to an active state. For example, the STA 210 may determine to transition the first link to an active state and the third link to an active state (e.g., to be used for ultra-low (UL) latency data traffic) while keeping the second link in the PS state. The third MLPM notification frame (e.g., generated by the STA 210) may include a PM bit that is set to 0 (e.g., to indicate that the STA 210 intends to transition to an active state) and a PM link bitmap that sets bit-0 to a value of 0 (e.g., to indicate that the PM state of the first link is an active state), that sets bit-1 to a value of 1 (e.g., to indicate that the PM state of the second link is a PS state), and that sets bit-2 to a value of 0 (e.g., to indicate that the third link is in an active state).

The AP 205 may process the third MLPM notification frame to determine that the PM bit is set to 0 (e.g. indicating that the STA 210 intends to transition to the active state), to determine that the first link and the third link are in active states, and to determine that the second link is in a PS state (e.g., based on the indications of the PM states of the first link, the second link, and the third link in the PM link bitmap, which are secured via a secure protocol).

In some implementations, the AP 205 may transmit, and the STA 210 may receive, an acknowledgement frame to acknowledge successful reception of the third MLPM notification frame (e.g., to notify the STA 210 that the third MLPM notification has been received by the AP 205).

In some implementations, the STA 210 may evaluate a reachability of a link, included in the set of links, that is in an active state. For example, and to evaluate a reachability of the third link (e.g., which was indicated as being in the active state via the PM link bitmap transmitted in the third MLPM notification frame), the STA 210 may transmit a fourth MLMP notification frame over the third link. If the STA 210 receives (e.g., from the AP 205) an acknowledgement frame to acknowledge successful reception of the fourth MLPM notification frame, the STA 210 may determine that the third link is reachable. If the STA does not have an acknowledgement frame to acknowledge successful reception of the fourth MLPM notification frame, the STA 210 may determine that the third link is not reachable.

In some implementations, the MLPM notification frame (e.g., the protected EHT action frame) may be valid only after the STA 210 is authorized (e.g., after a four-way handshake has been performed). In some implementations, links that are not involved in an association setup may be considered (e.g., by the AP 205) to be in a PS state.

In this way, PM transitions for each link, included in the set of links, may be indicated via a frame (e.g., a single frame) that may be transmitted over any available link included in the set of links. This results in improved bandwidth utilization, increased communication medium availability, reduced power consumption for connected devices (e.g., connected STAs), increased flexibility in communicating PM states of inaccessible links and/or unavailable links (e.g., in a multi-link connection), and enhanced reliability of data transmission (e.g., because the AP is aware of a PM state of the STA for each link with which the STA is associated with) relative to PM transitions indicated via the LPSM.

As indicated above, Figs. 2A-2F are provided as an example. Other examples may differ from what is described with regard to Figs. 2A-2F. The number and arrangement of devices shown in Figs. 2A-2F are provided as an example. In practice, there may be additional devices, fewer devices, different devices, or differently arranged devices than those shown in Figs. 2A-2F. Furthermore, two or more devices shown in Figs. 2A-2F may be implemented within a single device, or a single device shown in Figs. 2A-2F may be implemented as multiple, distributed devices. Additionally, or alternatively, a set of devices (e.g., one or more devices) shown in Figs. 2A-2F may perform one or more functions described as being performed by another set of devices shown in Figs. 2A-2F.

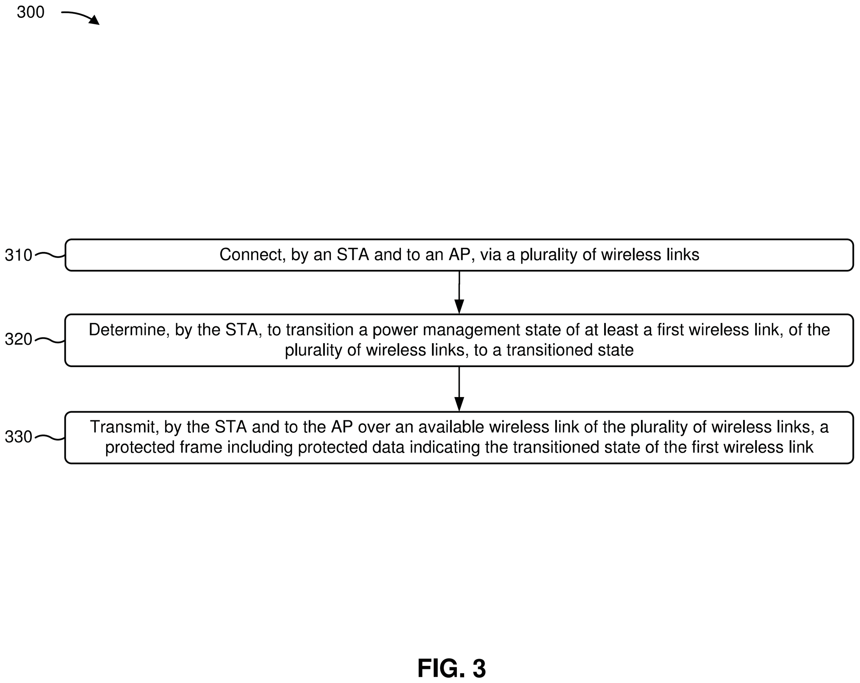

Fig. 3 is a flowchart of an example process 300 associated with link-independent secured PM in a network. In some implementations, one or more process blocks of Fig. 3 may be performed by an STA (e.g., the wireless communication device 106 and/or the STA 210). In some implementations, one or more process blocks of Fig. 3 may be performed by another device, or a group of devices, separate from or including the STA, such as an IoT device. Additionally, or alternatively, one or more process blocks of Fig. 3 may be performed by one or more components of the computing device 114.

As shown in Fig. 3, the process 300 may include connecting, by an STA and to an AP, via a plurality of wireless links (block 310). For example, the STA may connect to the AP via a plurality of wireless links, as described in more detail elsewhere herein.

As further shown in Fig. 3, the process 300 may include determining to transition a PM state of at least a first wireless link, of the plurality of wireless links, to a transitioned state (block 320). For example, the STA may determine to transition a PM state of at least a first wireless link, of the plurality of wireless links, to a transitioned state, as described in more detail elsewhere herein.

In some implementations, a transitioned state may refer to a change in the PM state of a link (e.g., included in the set of links), where the link transitions from one operational state to another state (e.g., to optimize power consumption or maintain network connectivity, among other examples). For example, when the STA detects a period of inactivity or a need for conserving energy, the STA may transition the link from an active state (e.g., the radio-on or the keep-alive state, among other examples) to a PS state (e.g., the sleep state, the doze state, or the idle state, among other examples). Conversely, when the STA is ready to resume communication or data exchange, the STA may transition the link from a PS state to an active state.

As further shown in Fig. 3, the process 300 may include transmitting, by the STA and to the AP and over an available wireless link of the plurality of wireless links, a frame including protected data indicating the transitioned state of the first wireless link (block 330). For example, the STA may transmit, to the AP and over an available wireless link of the plurality of wireless links, a frame including protected data indicating the transitioned state of the first wireless link, as described in more detail elsewhere herein.

In some implementations, the frame may be a protected frame (e.g., a protected management frame, among other examples). In some implementations, the first wireless link may be identified via a link identifier included in the protected data. In some implementations, the transitioned state may be indicated via a link bitmap corresponding to the plurality of wireless links.

In some implementations, the STA may determine to maintain a PM state of at least a second wireless link, of the plurality of wireless links, in a same state. The protected data may further indicate the same state of the second wireless link.

In some implementations, the transitioned state may be an active state and the same state may be a power-save state. The STA may receive, from the AP and based on the transitioned state being the active state, a data frame over the first wireless link.

In some implementations, the available wireless link may be different from the first wireless link and the transitioned state is a power-save state.

In some implementations, the transitioned state may be an active state and a PM state of at least a second wireless link, of the plurality of wireless links, may remain in an active state. The STA may transmit, to the AP and over one of the first wireless link or the second wireless link, a subsequent frame including subsequent protected data indicating the transitioned state of the first wireless link and the active state of the second wireless link to determine a reachability of the first wireless link or the second wireless link.

In some implementations, the protected data may indicate a PM state for each wireless link of the plurality of wireless links. In some implementations, the frame may include a PM bit indication in a header of the frame. The STA may receive an acknowledgment of the transitioned state based on the protected data indicating the transitioned state.

In some implementations, two or more wireless links, of the plurality of wireless links, may be operable in different bands. In some implementations, the station may be associated with at least a second wireless link, of the plurality of wireless links, that is in a default PM state. In some implementations, the station may be connected to the AP via the plurality of wireless links after the STA has been authorized by the AP. In some implementations, the frame may be a protected EHT action frame defined according to an 802.11 standard, as described in more detail elsewhere herein.

Although Fig. 3 shows example blocks of the process 300, in some implementations, the process 300 may include additional blocks, fewer blocks, different blocks, or differently arranged blocks than those depicted in Fig. 3. Additionally, or alternatively, two or more of the blocks of process 300 may be performed in parallel.

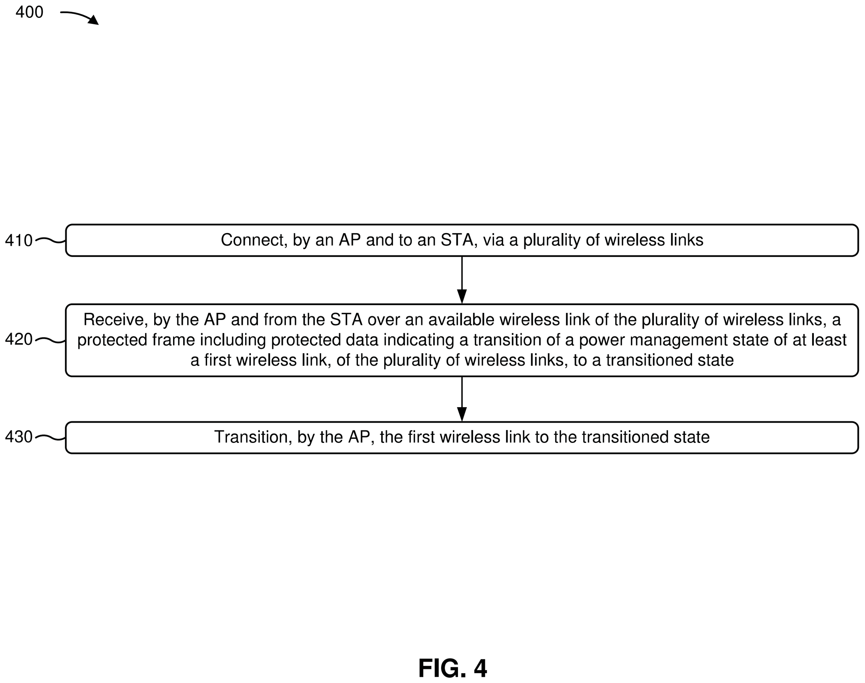

Fig. 4 is a flowchart of an example process 400 associated with link-independent secured PM in a network. In some implementations, one or more process blocks of Fig. 4 may be performed by an AP (e.g., the network device 104 and/or the AP 205). In some implementations, one or more process blocks of Fig. 4 may be performed by another device, or a group of devices, separate from or including the AP, such as a different network device. Additionally, or alternatively, one or more process blocks of Fig. 4 may be performed by one or more components of the computing device 114.

As shown in Fig. 4, the process 400 may include connecting, by an AP and to an STA, via a plurality of wireless links (block 410). For example, the AP may connect to the STA via a plurality of wireless links, as described in more detail elsewhere herein.

As further shown in Fig. 4, the process 400 may include receiving, by the AP and from the STA over an available wireless link of the plurality of wireless links, a frame including protected data indicating a transition of a PM state of at least a first wireless link, of the plurality of wireless links, to a transitioned state (block 420). For example, the AP may receive, from the STA over an available wireless link of the plurality of wireless links, a frame including protected data indicating a transition of a PM state of at least a first wireless link, of the plurality of wireless links, to a transitioned state, as described in more detail elsewhere herein.

As further shown in Fig. 4, the process 400 may include transitioning, by the AP, the first wireless link to the transitioned state (block 430). For example, the AP may transition the first wireless link to the transitioned state, as described in more detail elsewhere herein. In some implementations, the protected data may include a link ID of the first wireless link and the AP may identify the first wireless link via the link ID.

Although Fig. 4 shows example blocks of the process 400, in some implementations, the process 400 may include additional blocks, fewer blocks, different blocks, or differently arranged blocks than those depicted in Fig. 4. Additionally, or alternatively, two or more of the blocks of process 400 may be performed in parallel.

Furthermore, although some implementations described herein are associated with Wi-Fi^{®} devices including circuitry configured to manage multiple MAC and PHY layers associated with different frequency bands and/or channels, the systems and methods described herein may be applied to any suitable connections between devices, such as a single link connection (e.g., as a replacement to the LPSM).

Accordingly, some implementations described herein provide a method for secure PM notifications in a wireless local area network (WLAN). The method may include generating, by a device, a frame including protected data indicating a change in a PM state of at least a first wireless link, of a plurality of wireless links, to which a station in the WLAN is connected to an access point in the WLAN. The method may further include transmitting, by the device and to the access point, the frame.

Additionally, the functionality of the elements described herein may be implemented using circuitry or processing circuitry, including general-purpose processors, special-purpose processors, integrated circuits, application-specific integrated circuits (ASICs), conventional circuitry, or combinations thereof, configured or programmed to perform the disclosed functionality. A processor is a type of processing circuitry, as it includes transistors and other physical circuit components. A processor may execute instructions stored in a memory, thereby operating as a programmed processor. In this disclosure, the terms "circuitry," "units," or "means" refer to hardware that performs, or is programmed to perform, the described functionality. Such hardware may include any disclosed hardware or other known hardware that is configured or programmed to execute the described functions. When the hardware includes a processor, which is a type of circuitry, the circuitry, means, or units refer to a combination of hardware and software, where the software configures the hardware and/or processor to perform the specified functions.

Even though particular combinations of features are recited in the claims and/or described in this disclosure, these combinations are not intended to limit the disclosure of various implementations. In fact, many of these features may be combined in ways not specifically recited in the claims and/or described in this disclosure. Although each dependent claim listed below may directly depend on only one claim, the disclosure of various implementations includes each dependent claim in combination with every other claim in the claim set.

When an element is referred to herein as being "connected" or "coupled" to another element, it should be understood that the elements can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

As used herein, a phrase referring to "at least one of" a list of items refers to any combination and permutation of those items, including single members (e.g., an individual item in the list of items). As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list of items). As an example, "a, b, and/or c" is intended to cover a, b, c, a-b, a-c, b-c, and a-b-c.

No element, act, or instruction described herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used herein. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A station, comprising:
circuitry configured to:
connect to an access point via a plurality of wireless links;
determine to transition a power management state of at least a first wireless link, of the plurality of wireless links, to a transitioned state; and
transmit, to the access point and over an available wireless link of the plurality of wireless links, a frame including protected data indicating the transitioned state of the first wireless link.

2. The station of claim 1, wherein
the frame is a protected management frame.

3. The station of claim 1 or 2, wherein
the first wireless link is identified via a link identifier included in the protected data.

4. The station of any one of the claims 1 to 3, wherein the transitioned state is indicated via a link bitmap corresponding to the plurality of wireless links.

5. The station of any one of the claims 1 to 4, wherein
the circuitry is further configured to:
determine to maintain a power management state of at least a second wireless link, of the plurality of wireless links, in a same state,
wherein the protected data further indicates the same state of the second wireless link.

6. The station of claim 5, wherein
the transitioned state is an active state,
wherein the same state is a power-save state, and
wherein the circuitry is further configured to:
receive, from the access point and based on the transitioned state being the active state, a data frame over the first wireless link.

7. The station of any one of the claims 1 to 6, wherein
the available wireless link is different from the first wireless link, and
the transitioned state is a power-save state.

8. The station of any one of the claims 1 to 7,
wherein the transitioned state is an active state,
wherein a power management state of at least a second wireless link, of the plurality of wireless links, remains in an active state, and
wherein the circuitry is further configured to:
transmit, to the access point and over one of the first wireless link or the second wireless link, a subsequent frame including subsequent protected data indicating the transitioned state of the first wireless link and the active state of the second wireless link to determine a reachability of the first wireless link or the second wireless link.

9. The station of any one of the claims 1 to 8, wherein
the protected data indicates a power management state for each wireless link of the plurality of wireless links.

10. The station of any one of the claims 1 to 9, wherein
the frame includes a power management bit indication in a header of the frame, and wherein the circuitry is further configured to:
receive an acknowledgment of the transitioned state based on the protected data indicating the transitioned state.

11. The station of any one of the claims 1 to 10, further comprising at least one of the following features:
two or more wireless links, of the plurality of wireless links, are operable in different bands;
the station is associated with at least a second wireless link, of the plurality of wireless links,
that is in a default power management state;
the station is connected to the access point via the plurality of wireless links after the station has been authorized by the access point;
the frame is a protected extremely high throughput (EHT) action frame defined according to an 802.11 standard.

12. An access point, comprising:
circuitry configured to:
connect to a station via a plurality of wireless links;
receive, from the station and over an available wireless link of the plurality of wireless links, a frame including protected data indicating a transition of a power management state of at least a first wireless link, of the plurality of wireless links, to a transitioned state; and
transition the first wireless link to the transitioned state.

13. The access point of claim 12, wherein
the available wireless link is different from the first wireless link, and
the transitioned state is a power-save state;
and/or
the transitioned state is an active state, and
the protected data further indicates a power management state of at least a second wireless link, of the plurality of wireless links, remains in a same state.

14. The access point of claim 12 or 13, wherein
the protected data includes a link identifier of the first wireless link, and
the circuitry is further configured to:
identify the first wireless link via the link identifier;
and/or
the frame is a protected management frame.

15. A method for secure power management notifications in a wireless local area network, WLAN, the method comprising:
generating, by a device, a frame including protected data indicating a change in a power management state of at least a first wireless link, of a plurality of wireless links, to which a station in the WLAN is connected to an access point in the WLAN; and
transmitting, by the device and to the access point, the frame.
